Europäisches Patentamt

European Patent Office

Office européen des brevets

(11) Veröffentlichungsnummer: **0 229 209**

**A1**

# (12) EUROPÄISCHE PATENTANMELDUNG

(21) Anmeldenummer: 86100476.0

(22) Anmeldetag: 15.01.86

(51) Int. Cl.⁴: **E02D 31/00** , B09B 1/00

(43) Veröffentlichungstag der Anmeldung:
22.07.87 Patentblatt 87/30

(84) Benannte Vertragsstaaten:
**AT BE CH DE FR GB IT LI LU NL SE**

(71) Anmelder: **Schneider, Reinhard**
**Lonystrasse 9**
**D-6300 Giessen(DE)**

(72) Erfinder: **Schneider, Reinhard**
**Lonystrasse 9**
**D-6300 Giessen(DE)**

(74) Vertreter: **Jackisch, Walter, Dipl.-Ing. et al**
**Menzelstrasse 40**
**D-7000 Stuttgart 1(DE)**

(54) **Mülldeponie mit Brunnen zum Sammeln und Abführen der Zersetzungsgase.**

(57) Die Erfindung betrifft eine Mülldeponie (2), die mit Gasbrunnen (1) ausgestattet ist, die die entstehenden Zersetzungsgase sammeln und abführen. Die Gasbrunnen sind mit Hohlräume bildenden Abfallstoffen (3) gefüllt, so daß die Zersetzungsgase durch die Hohlräume (4) nach oben steigen können und das Sickerwasser durch diese nach unten sickern kann.

Fig. 1

# Mülldeponie mit Brunnen zum Sammeln und Abführen der Zersetzungsgase

Die Erfindung betrifft eine Mülldeponie mit brunnenartigen Aushüben zum Sammeln und Abführen der dort entstehenden Zersetzungsgase.

Es ist bekannt, die Entgasung von Mülldeponien durch Anlegen von senkrechten Gasbrunnen zu beschleunigen (Schmidt, E., Fortschritte in der Deponietechnik, erste Auflage, Erich Schmidt Verlag, Bielefeld 1978). Die bisher bekannten Kamine oder Gasbrunnen bestehen z.B. aus übereinander gesetzten Betonringen, die üblicherweise mit Kies als Drainagematerial gefüllt sind. Der Durchmesser dieser Gasbrunnen beträgt bis zu 1 m.

Als nachteilig erweist sich bei den mit Kies gefüllten Gasbrunnen, daß sich der Kies durch das Sickerwasser und bestimmte Bestandteile des erzeugten Biogases betonartig zusetzt und verdichtet wird, so daß nach einigen Jahren die Drainagewirkung stark nachläßt. Außerdem hat Kies, der bisher als Drainagematerial verwendet wurde, den weiteren Nachteil, daß er beim Fall in eine Grube von größerer Tiefe infolge der hohen Fallgeschwindigkeit zerstört wird, was die verbleibenden Gasaufnahmeräume verkleinert und damit die Drainagewirkung zusätzlich beeinträchtigt.

Der Erfindung liegt die Aufgabe zugrunde, mit konstruktiv geringem Aufwand Gasbrunnen zu schaffen, die die entstehenden Zersetzungsgase auch noch nach Jahren bei gleichbleibend geringem Durchflußwiderstand einwandfrei aus der Deponie entweichen lassen.

Diese Aufgabe wird erfindungsgemäß dadurch gelöst, daß senkrechte Gasbrunnen mit großvolumigen, Hohlräume bildenden Abfallstoffen aufgefüllt sind, und daß die senkrechte Länge der Gasbrunnen bis zu 100 m und deren Durchmesser mindestens etwa 1 m oder deren Querschnitt mindestens etwa 1 m² beträgt.

Um einerseits eine gute Drainagewirkung zu erzielen und andererseits den materiellen Aufwand gering zu halten, bestehen nach einer weiteren Ausbildung der Erfindung die Abfallstoffe aus Altreifen oder Plastikbehältern, die entweder eine wirre, völlig regellose Lage haben oder aber gezielt zu Röhren gestapelt sind, so daß in diesen aus Altreifen oder Plastikbehältern bestehenden Röhren Drainagerohre geleitet werden können.

Zur Abstützung der Gasbrunnen gegen den Druck des allseits angrenzenden Erdreichs können diese durch Ausfüllen der relativ großen Hohlräume, die zwischen den Plastikbehältern oder Altreifen bestehen, mit Kies, Splitt, Schotter, Reifenschnitzeln oder dgl. stabilisiert werden. Durch das nachträgliche Auffüllen mit Natursteinmaterialien, wie z.B. Kies, wird erreicht, daß der Kies nur über relativ geringe Fallhöhen, von einem Reifen zum anderen oder von einem Plastikbehälter zum anderen, in den Gasbrunnen gelangt, so daß das sonst übliche Zerschlagen von Natursteinen bei Fallhöhen von mehr als 5 m verhindert wird. Hierdurch wird auch das sonst bei mit Kies gefüllten Brunnen bekannte Zusetzen verhindert, daß dadurch entsteht, daß der aus relativ großen Fallhöhen abgeworfene Kies zerschlagen und gleichzeitig verdichtet wird, wodurch die Gasdurchlässigkeit des Brunnens stark beeinträchtigt wird. Bei den erfindungsgemäßen Brunnen wird dies vorteilhaft vermieden, so daß die Natursteinmaterialien auch in tiefen Brunnenschichten eine gute Gasdurchlässigkeit sowie Sickerwasserdurchlässigkeit haben.

Weitere Vorteile der Erfindung bestehen darin, daß mit einfachen Mitteln eine einwandfreie Gasabfuhr auch über Jahre hin erreicht wird. Zum Bau der Gasbrunnen sind keine kostspieligen Wandungen und teures, besonderes Füllmaterial erforderlich. Sie können mit einfachen Mitteln, mit den auf einer Mülldeponie zur Verfügung stehenden Abfallstoffen, gebaut werden und dienen gleichzeitig als Lagerstätte für diese Abfallstoffe.

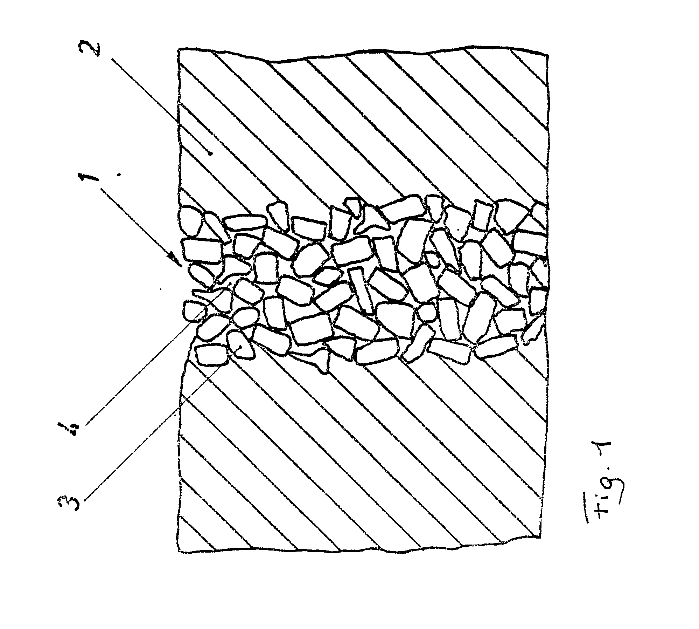

Ein Ausführungsbeispiel der Erfindung ist in der Zeichnung dargestellt und wird im folgenden näher beschrieben.

Die Zeichnung zeigt einen vertikalen Schnitt durch eine Mülldeponie mit Gasbrunnen.

Die Gasbrunnen 1 liegen, wie in der Zeichnung dargestellt, innerhalb der Mülldeponie 2. Dabei verläuft die Längsachse der Gasbrunnen etwa senkrecht in die Mülldeponie 2. Der Querschnitt des Gasbrunnens 1 ist vorzugsweise etwa kreisförmig gestaltet, kann aber erfindungsgemäß auch andere Formen haben. Der Durchmesser des Gasbrunnens 1 sollte mindestens 1 m betragen, da anderenfalls die großvolumigen Abfallstoffe 3 direkt vom Müllkörper umgeben werden, so daß sich keine für die Drainage notwendigen Hohlräume bilden können. Die senkrechte Länge der Gasbrunnen kann bei großen Deponien 50 m oder mehr betragen.

Wie die Zeichnung zeigt, ist der Gasbrunnen 1 mit großvolumigen, Hohlräume 4 bildenden Abfallstoffen aufgefüllt. Durch die zahlreichen Hohlräume 4 entsteht ein Netz von Kanälen, durch die das Gas nach oben aufsteigen und das Wasser nach unten durchsickern kann. In diesem Ausführungsbeispiel bestehen die Abfallstoffe 3 aus leeren Plastikbehältern, die aus Polyvenylchlorid (PVC), Polyethylen (PEE) oder anderen Kunststoffen hergestellt sind.

Erfindungsgemäß können die großvolumigen Abfallstoffe 3 auch als Altreifen bestehen, die entweder eine wirre, völlig regellose Lage haben oder aber zu langen Röhren gestapelt sind, so daß die Zersetzungsgase durch diese aufsteigenden, vorzugsweise senkrechten Kanäle strömen können.

Nach einem weiteren Merkmal der Erfindung können die zwischen den Abfallstoffen 3 gebildeten Hohlräume zur Abstützung des Brunnens gegen das allseits angrenzende Erdreich mit Natursteinmaterialien wie z.B. Schotter Kies oder Splitt, aber auch mit Reifenschnitzeln oder ähnlichem ausgefüllt werden. Hierbei ist von entscheidender Bedeutung, daß das Schüttmaterial wie Kies, Schotter, Splitt oder dgl. erst dann in den Brunnen gefüllt wird, wenn die großvolumigen Abfallstoffe 3 bereits in den Brunnen eingebracht sind, da hierdurch ein Zerschlagen der Natursteinmaterialien und ein Verdichten derselben wirksam verhindert werden kann.

Ein weiteres Merkmal der Erfindung sieht vor, daß innerhalb der zu Röhren gestapelten Altreifen seitlich geschlitzte oder perforierte Rohre in Achsrichtung des Gasbrunnens angeordnet sind, durch die die Zersetzungsgase mit Hilfe eines daran angeschlossenen Fördersystems abgesaugt werden.

Die im Ausführungsbeispiel beschriebenen Gasbrunnen 1 können sowohl bei schon bestehenden Deponien als auch bei Deponien, die sich noch in der Aufschüttung befinden, in einfacher Weise angelegt werden.

## Ansprüche

1. Mülldeponie mit brunnenartigen Aushüben zum Sammeln und Abführen der dort entstehenden Zersetzungsgase, die mit Abfallmaterial aufgefüllt sind,
dadurch gekennzeichnet, daß das Abfallmaterial aus großvolumigem, große Hohlräume (4) bildenden und stückigem Abfallgut (3) besteht.

2. Mülldeponie nach Anspruch 1,
dadurch gekennzeichnet, daß das Abfallgut aus Altreifen besteht, die in regelloser Lage, beispielsweise durch Aufschütten, angeordnet sind.

3. Mülldeponie nach Anspruch 1,
dadurch gekennzeichnet, daß das Abfallgut aus leeren Kunststoffbehältern, zum Beispiel PVC-oder PEE-Behältern besteht, die in regelloser Lager angeordnet sind.

4. Mülldeponie nach Anspruch 2 oder 3,
dadurch gekennzeichnet, daß die durch das Abfallgut (3) gebildeten Hohlräume (4) zumindest teilweise zur Abstützung mit gas-und flüssigkeitsdurchlässigem, sich nicht zusetzenden Schüttgut ausgefüllt sind.

5. Verfahren zum Anlegen von Gasbrunnen in Mülldeponien zum Sammeln und Abführen der darin entstehenden Zersetzungsgase, bei dem in der Mülldeponie etwa vertikale, brunnenartige Aushübe angelegt werden, die anschließend mit Füllmaterial aufgefüllt werden,
dadurch gekennzeichnet, daß die brunnenartigen Aushübe zunächst nur mit großvolumigem, stückigem und große Hohlräume (4) bildendem Abfallgut (3) gefüllt werden und anschließend mit gas- und flüssigkeitsdurchlässigem, sich nicht zusetzendem Schüttgut verfüllt werden, daß sich in vom großvolumigem Abfallgut gebildeten Hohlräumen sammelt.

Reinhard Schneider
Lonystraße 9
6300 Gießen

**0 229 209**

A 1-86 900/so
15.01.1986

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | GB-A-2 134 919 (COLLIER INDUSTRIAL WASTE)<br><br>--- | | E 02 D 31/00<br>B 09 B 1/00 |
| A | US-A-3 835 652 (HIGNITE)<br><br>--- | | |
| E | DE-A-3 425 784 (SCHNEIDER)<br>* Insgesamt *<br><br>----- | 1-4 | |

**RECHERCHIERTE SACHGEBIETE (Int. Cl.4)**

E 02 D
B 09 B

Der vorliegende Recherchenbericht wurde für alle Patentansprüche erstellt.

| Recherchenort | Abschlußdatum der Recherche | Prüfer |
|---|---|---|
| DEN HAAG | 15-09-1986 | RUYMBEKE L.G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82